(19) Europäisches Patentamt
European Patent Office
Office européen des brevets

(11) **EP 2 717 671 B1**

(12) **EUROPÄISCHE PATENTSCHRIFT**

(45) Veröffentlichungstag und Bekanntmachung des Hinweises auf die Patenterteilung:
**29.07.2015   Patentblatt 2015/31**

(21) Anmeldenummer: **12735424.9**

(22) Anmeldetag: **06.06.2012**

(51) Int Cl.:
*A01G 9/02* (2006.01)

(86) Internationale Anmeldenummer:
**PCT/AT2012/000160**

(87) Internationale Veröffentlichungsnummer:
**WO 2012/167296 (13.12.2012 Gazette 2012/50)**

(54) **WANDELEMENT UND DAMIT ERSTELLBARE STABIL- ODER BEHÄLTNISHÜLLEN, INSBESONDERE HOCHBEET-UMWANDUNGEN**

WALL ELEMENT AND STABLE SHELLS OR CONTAINER SHELLS, IN PARTICULAR RAISED BED WALLS, THAT CAN BE CREATED BY MEANS OF SAID WALL ELEMENT

ÉLÉMENT DE PAROI ET ENVELOPPES DE RÉCIPIENT OU DE STABILISATION, EN PARTICULIER PAROIS PÉRIPHÉRIQUES DE PLATES-BANDES SURÉLEVÉES, POUVANT ÊTRE FABRIQUÉES AVEC LEDIT ÉLÉMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2011   AT 8342011**

(43) Veröffentlichungstag der Anmeldung:
**16.04.2014   Patentblatt 2014/16**

(73) Patentinhaber: **Lumetzberger, Wolfgang**
**4225 Luftenberg (AT)**

(72) Erfinder: **Lumetzberger, Wolfgang**
**4225 Luftenberg (AT)**

(74) Vertreter: **Wildhack, Andreas**
**Wildhack & Jellinek**
**Patentanwälte OG**
**Landstrasser Hauptstraße 50**
**1030 Wien (AT)**

(56) Entgegenhaltungen:
DE-A1- 3 442 165      DE-A1- 4 328 624
FR-A1- 2 889 407      US-A1- 2003 102 361

## Beschreibung

Die Erfindung betrifft ein neues, Rechteck- und/oder Quadrat-Hauptflächen aufweisendes Wandelement aus plattenartigem Flachmaterial für die Wandung von Parallelepiped-, vorzugsweise Kubus- Quader oder Mehreck-Prismenform aufweisenden Stabil- oder Behältnishüllen für rieselfähiges, körniges, stückiges und/oder zuerst fließfähiges und dann erhärtendes Gut, insbesondere für Umfassungswandungen von Hochbeeten, wobei an zwei von deren einander gegenüberliegenden, zueinander parallelen Seiten seitlich jeweils mindestens ein weiteres gleichartig ausgebildetes Wandelement unter Bildung einer gemeinsamen vertikalen Kante der Wandung der Parallelepipedform aufweisenden Stabil- oder Behältnishüllen anschließbar ist.

Wandsegmente mit Verbindungsbereichen in Seitenbereichen ihrer Wandelemente sind beispielsweise aus DE 103 03 640 A1 bekannt. Darin ist beschrieben, in Seitenansicht L-förmige Wandsegmente fluchtend aneinander zu reihen, so dass zwischen den Wandsegmenten Stoßstellen entstehen, welche mittels Winkelplatten überbrückt werden. Die Wandsegmente werden in den Überlappungsbereichen der Wandsegmente und der jeweiligen Winkelplatten mit den Winkelplatten verbunden. Bei der Verwendung von Verschraubungen für die Verbindung der Wandsegmente mit den Winkelplatten ist auf der Außenseite des von mehreren Wandsegmenten umschlossenen Raumes immer ein Teil der für die Verschraubung eingesetzten Schrauben zu sehen.

Aus der DE 20 2005 000 418 U1 ist eine Einfassung für ein Hochbeet bekannt, welche aus Wandungen aus faserverstärktem Kunststoff besteht, in deren Seitenbereichen Ausnehmungen und Vorsprünge für die Bildung einer nut- und federartigen Verbindung zweier benachbarter Wandungen vorgesehen sind. Die nut- und federartigen Verbindungen werden mittels Verbindungselementen zusätzlich fixiert. Je nachdem, auf welcher Seite der Wandungen die Verbindungselemente vorgesehen sind, sind diese entweder schwierig zu erreichen, oder aber von außen sichtbar.

Der De 20 2009 010 705 U1 ist ein Wandsegment für die Einfassung von Hochbeeten, mit einem sich in Hochrichtung erstreckenden Wandbereich zu entnehmen, in dessen Seitenbereichen je wenigstens ein an den Wandbereich angrenzender, sich ebenfalls in Hochrichtung erstreckender Verbindungsbereich für die Verbindung des Wandsegments mit Verbindungsbereichen weiterer Wandsegmente oder einer sonstigen Wand vorgesehen ist, bei welchem der Verbindungsbereich relativ zum Wandbereich abgewinkelt ist.

Bei dem Hochbeet gemäß der letztgenannten DE-U1 sind die Wandelemente zwar in vertikaler Richtung versteift, es fehlt jedoch jegliche Art der Versteifung derselben in Horizontalrichtung.

Ein weiteres Wandelement für Hochbeete ist aus der DE4328624 A1 benannt.

Die vorliegende Erfindung vermeidet die beschriebenen Nachteile und betrifft Wandelemente für die Erstellung von Stabil- oder Behältnishüllen, die insbesondere eine Hochbeet-Umwandung bilden, der eingangs genannten Art, welche dadurch gekennzeichnet sind,

- dass entlang der genannten beiden Seiten der Hauptfläche jeweils ein Kantenstabilisierstreifen, um einen, dem halben Kanten-Innenwinkel ($\alpha$) des jeweiligen Parallelepipeds entsprechenden Winkel $\dfrac{\alpha}{2}$ umgebogen ist,

- dass das einzelne Wandelement zusätzlich zu den genannten Kantenstabilisierstreifen - entlang der beiden anderen, ebenfalls einander gegenüberliegenden Seiten von seiner Hauptfläche in gleicher Richtung wie die Kantenstabilisierstreifen um einen Winkel von 90° umgebogene Versteifungs- und Verbindungsstreifen aufweist, und

- dass die beiden Kantenstabilisierungsstreifen jeweils an ihren beiden Enden um einen geringen Betrag verkürzt sind.

Mit dieser neuen Bauart der Wandelemente einer Behältnishülle, die insbesondere einer Hochbeet-Umwandung bildet, ist volle Steifigkeit des Wandelementes sowohl in vertikaler als auch in horizontaler Richtung gewährleistet, es werden Ausbuchtungen der Wände von mit diesen neuen Wandelementen aufgebauten Behältnishüllen oder Hochbeet-Umrandungen, insbesondere bei Füllung derselben z.B. mit Tonpellets oder feuchter Erde oder Beton auch bei größeren Seitenlängen derselben sicher vermieden.

Was die konkrete Bauform der neuen hochfesten Stabil- oder Behälterhüllen betrifft, hat es sich als besonders vorteilhaft erwiesen, wenn deren Wandelemente aus einem, bevorzugt vor Ort und mit einfachem Werkzeug, entlang von Materialschwächungsgeraden bruch- und rissfrei umkantbaren Flachmaterial gefertigt sind.

Besonders bevorzugt im Rahmen der vorliegenden Erfindung ist ein Wandelement, welches, dadurch gekennzeichnet ist,

- dass es aus einem vor Ort händisch entlang von Materialschwächungsgeraden bruch- und rissfrei umkantbaren Flachmaterial, bevorzugt aus einer - der jeweiligen Hauptfläche des Wandelements entsprechende Form aufweisenden - Grundplatte, aus einem mechanisch steifen Verbundmaterial, vorzugsweise Metall-, insbesondere Aluminium-Kunststoff-Verbundmaterial mit beidseitig an eine Kunststoff-, insbesondere Polyethylen-Mittelschicht, flächig gebundenen, dünnen Metall-, insbesondere Aluminiumblech-Schichten gebildet ist,

- wobei auf einer Seite der Grundplatte entlang von insgesamt die Hauptfläche eines jeweiligen Wandelements definierenden, im Abstand parallel zu allen Seitenrändern der Grundplatte verlaufenden Materialschwächungsgeraden eine der Metall-, insbesondere Aluminium-Blechschichten unter Bildung einer zumindest bis in die Kunststoff-Mittelschicht, gegebenenfalls bis zur anderen Metall-, insbesondere Aluminium-Blechschicht, reichenden, vorzugsweise gerundete Kanten und runden Nutgrund aufweisenden, Nut abgetragen ist.

Bei diesen gemäß der Erfindung besonders bevorzugten Wandelementen ist der heute durchaus wichtige Vorteil gegeben, dass die Wandelemente als volumsarm stapel- und transportfreundliche flachebene Grundplatten an den jeweiligen Aufstellungsort angeliefert werden können, und erst dort von jedermann, und zwar mit ganz einfachem Werkzeug und mit bloßen Händen zuerst zu den jeweiligen, letztlich dreidimensionalen Wandelementen mit von deren Hauptfläche im Winkel abstehenden, letztlich vertikalen, Kantenstabilisierungs- und horizontalen Versteifungs- und Verbindungsstreifen umgestaltet und danach, z.B. durch Schraubung, Vernietung oder Verklebung, zu den Stabil- oder Behälterhüllen, die insbesondere (Hochbeet-)Umrandungen bilden, vereinigt werden können.

Um bei den neuen Behältnishüllen Probleme beim Verbinden der Versteifungs- und Verbindungsstreifen zweier seitlich aneinander grenzender Wandelemente mit den an deren Kanten-Innenbereichen zu nach innen wegragenden Kantenstabilisierstreifen zu vermeiden, ist ein Wandetement bevorzugt, bei dem dessen beide Versteifungs- und Verbindungsstreifen im wesentlichen die Form eines flachen Trapezes aufweisen.

Weiters ist es insbesondere im Hinblick auf ästhetisches Aussehen und eventuelle Werbewirksamkeit von Vorteil, wenn das aus der für dessen Bildung vorgesehenen Grundplatte gebildete Wandelement selbst auf einer - der Außenseite des mit weiteren Wandelementen letztlich zu bildenden Parallelepipedform aufweisenden Stabil- oder Behältnishüllen entsprechenden - Seite bedruckt und/oder färbig ausgebildet oder beschichtet ist, insbesondere, dass dort eine von dessen Metall-, insbesondere Aluminium-Blechschichten als färbige Eloxalschicht vorliegt..

Einen weiteren wesentlichen Gegenstand der Erfindung bildet eine Parallelepiped-, insbesondere Kubus-, Quader- oder Mehreckprismenform aufweisende Stabil- oder Behältnishülle für rieselfähiges, körniges, stückiges und/oder zuerst fließfähiges und dann erhärtendes Gut, welche insbesondere die Umfassungswandung von Hochbeeten od. dgl. bildet, welche dadurch gekennzeichnet ist,

- dass sie mit mindestens drei Wandelementen, wie sie oben beschrieben sind, gebildet ist,
- wobei die Wandelemente unter Bildung der vertikalen Stabil- oder Behältnishüllen-Kanten über ihre flächig aneinanderliegenden Kantenstabilisierstreifen geschlossen-ringförmig aneinander geschlossen sind,

- indem die jeweils seitlich aneinandergrenzenden Wandelemente mittels, mit ihren Schenkeln an die Endbereiche der um 90° von der Hauptfläche nach innen hin umgebogenen Versteifungs- und Verbindungsstreifen gebundenen, und mit ihrem Winkelbereich im Stabil- oder Behältnishüllen-Kanten-Innenwinkelbereich angeordneten Winkel-Verbindungselementen aus Metall, rigidem Kunststoff oder Metall-Kunststoff-Verbundmaterial zur jeweiligen parallel-epipedischen Stabil- oder Behältnishüllen-Form aneinander gebunden sind.

Im Rahmen der vorliegenden Erfindung ist eine Stabilhülle oder Behältnishülle, die insbesondere eine Hochbeet-Umwandung bildet, von Vorteil, welche z.B. ein gärtnerisches Arbeiten auf der Beetoberfläche in handhabungsfreundlicher Höhe ermöglicht und welche dadurch gekennzeichnet ist,

- dass sie mit zumindest zwei, vorzugsweise mit drei und vorzugsweise vertikal fluchtend aufeinander angeordneten, Stabil- oder Behältnishüllen, die insbesondere Umfassungswandungen bilden, gemäß Anspruch 5 gebildet ist,
- wobei eine jeweils untere Stabil- oder Behältnishülle, die insbesondere eine Umfassungswandung bildet, über ihre oberen, waagrecht verlaufenden Versteifungs- und Verbindungsstreifen mittels Winkel-Verbindungselementen mit den an denselben flächig anliegenden unteren Versteifungs- und Verbindungsstreifen.der auf der jeweils unterhalb angeordneten Stabil- oder Behältnishülle, die insbesondere eine Umfassungswandung bildet, ruhenden oberen Stabil- oder Behältnishülle bevorzugt lösbar, verbunden ist.

Günstig ist es, wenn die Winkelverbindungselemente - Verbindungselemente mit den Versteifungs- und Verbindungsstreifen einer einzelnen Stabil- oder Behältnishülle oder mit den flächig aneinanderliegenden Versteifungs- und Verbindungsstreifen zweier fluchtend aufeinander angeordneter Stabil- oder Behältnishüllen mittels, bevorzugt mehrfacher, Verschraubung lösbar oder mittels Vernietung oder Verklebung unlösbar verbunden sind.Je nach Bedarf können selbstverständlich auch drei oder mehr derartige Hüllen aufeinander angeordnet sein.

Es soll diese Stelle erwähnt sein, dass z.B. bei Hochbeeten, als unterste, Parallelepipedform aufweisende Stabilhülle eine räumlich größere Umwandung angeordnet sein und darüber eine beispielsweise grundflächen-kleinere derartige Umwandung usw., sodass eine etwa stufenpyramidenartige Kombination von Stabilhüllen entsteht.

Um die Stabilität der neuen Stabil- oder Behältnishüllen gegen Ausbauchen od. dgl., insbesondere bei großen Seitenlängen der einzelnen Hauptflächen derselben zusätzlich zu sichern, ist es günstig, wenn die aneinander flächig anliegenden oberen und unteren Versteifungs- und Verbindungsstreifen zweier fluchtend aufeinander angeordneter Stabilhüllen oder Behältnishüllen, selbst, bevorzugt durch gesonderte Verschraubungen oder Vernietungen, miteinander verbunden sind.

Insbesondere im Sinne des Schutzes der Pflanzen im Hochbeet vor Fraßschäden ist die Anbringung einer rund um die Beet-Umwandungs-Stabilhülle laufenden, nach außen hin schräg abfallenden Schneckenkante an derselben günstig.

In diesem Sinne ist es von Vorteil, wenn zwischen den oberen und unteren Versteifungs- und Verbindungsstreifen zweier fluchtend aufeinander angeordneter Stabilhüllen, die insbesondere Umfassungswandungen bilden, jeweils der Schneckenkanten-Haltestreifen eines die genannte Stabilhülle außen überragenden, eine Schneckenkante bildenden Schneckenkantenstreifen angeordnet ist.

Weiters kann, wenn dies notwendig oder gewünscht ist, die neue Stabilhülle so gestaltet werden, dass deren Grund-, und gegebenenfalls Deckfläche mit einer der jeweiligen Parallelepiped-Grundrissform entsprechend geformten Grund-, und gegebenenfalls Deckplatte ausgestattet ist (sind), welche an die untersten Versteifungs- und Verbindungsstreifen; uns gegebenenfalls an die obersten Versteifungs-, und Verbindungsstreifen, dort jeweils flächig anliegend, vorzugsweise durch Verschraubung, Vernietung oder Verklebung, gebunden ist (sind).

Schließlich ist es im Rahmen der vorliegenden Erfindung wichtig, dass nach Anlieferung der den oben beschriebenen Wandelementen zugrunde liegenden, mit den Materialschwächungsgeraden versehenen, flachebenen Grundplatten, die Aufstellung der neuen Stabilhüllen oder Behältnishüllen, direkt am Aufstellungsort und, wie oft bevorzugt, durch den Besteller und Konsumenten selbst ermöglich ist.

Demgemäß ist das erfindungsgemäße Verfahren der Er- und Aufstellung der erfindungsgemäßen Stabil- oder Behältnishüllen, bevorzugt, das darin besteht,

- dass die für die Bildung von dessen vertikalen Hauptflächen vorgesehen, in volumsminimiertem flachebenen Zustand vorliegenden oder angelieferten - im wesentlichen Rechteck- oder Quadratform mit Einschnitten an den Ecken aufweisenden Grundplatten, gegebenenfalls vor Ort und mit einfachem Werkzeug, entlang ihrer vier Materialschwächungsgeraden (21) nach einer Seite der Grundplatte (20) hin um einen halben Kantenwinkel $\left(\dfrac{\alpha}{2}\right)$ zu zwei einander gegenüberliegenden Vertikal-Kantenstabilisierstreifen und jeweils um einen rechten Winkel zu zwei ebenfalls einander gegenüberliegend und zueinander parallel verlaufenden Versteifungs- und Verbindungsstreifen auf- bzw. umgebogen werden, um die einzelnen Wandelemente zu bilden und

- dass dann die einzelnen, auf diese Weise mit ihren vertikalen Kantenstabilisierstreifen flächig aneinanderliegenden Wandelemente, mittels an die Versteifungs- und Verbindungsstreifen gebundenen Winkel-Verbindungselementen zu den genannten parallelepiped-förmigen Stabil- oder Behälterhüllen, die insbesondere Umfassungswandungen für Hochbeete u. dgl. bilden, vereinigt werden.

Zusammenfassend ist festzuhalten, dass bis jetzt nur Hochbeete aus den Materialien Spritzguss, Metall, beschichtete Holzfaserplatten oder Holz auf dem Markt sind. Diese haben meist eine relativ kurze Lebensdauer, verwittern oder korrodieren rasch und/oder behalten ihre ursprüngliche Form nicht über ihre Lebensdauer.

Die neue Stabilhülle, ist, insbesondere, wenn sie als Hochbeet-Umwandung eingesetzt ist, bevorzugt aus die Wandelemente derselben bildenden Metall-Kunststoff-, insbesondere Aluminium-Polyethylen-Verbundplatten, die bis jetzt üblicherweise als Fassadenplatte eingesetzt werden, gefertigt.

Die aus dem bevorzugt eingesetzten Verbundmaterial erstellten Stabil- oder Behältnishüllen haben eine sehr hohe Festigkeit und Steifigkeit. Dafür sorgen - neben dem mechanisch steifen Grundplattenmaterial - unter anderem die speziellen Eckverbindungselemente, insbesondere die in den Parallelepiped-Kanten-Innenwinkelbereichen angeordneten entsprechenden Winkelelemente.

Bei der Zustellung zum Kunden bzw. an den jeweiligen Aufstellungsort zeichnen sich die erfindungsgemäß einzusetzenden Grundplatten durch ein äußerst geringes Transportvolumen aus.

Das besonders bevorzugt einzusetzende Aluminium-Kunststoff-Sandwich-Verbundmaterial der neuen Wandelemente und der damit erstellbaren Stabilhüllen korrodiert praktisch nicht.

Die neuen Wandelemente weisen zudem ein vergleichsweise geringes Gewicht auf.

Keineswegs zu vernachlässigen ist, dass die neuen Wandelemente aus einem handelsüblichen Plattenmaterial für Fassadenverkleidungen mit geringem Aufwand zu fertigen sind und dass sie keinen gesonderten Rahmen benötigen.

Die mit den neuen Wandelementen gebildeten neuen Stabil- oder Behältnishüllen sowie weiters Behälter oder Umwandungen benötigen keine inneren Querverbinder zur Formhaltung, da das Sandwichmaterial hohe mechanische Steifigkeit, gleichzeitig aber die für ein Umkanten notwendige, relativ leichte Biegsamkeit aufweist.

Der besondere Vorteil der neuen Wandelemente besteht darin, dass sie sich für eine handhabungsfreundliche Erstellung von Stabil- oder Behältnishüllen und in den verschiedensten Formen, insbesondere von Hochbeeten, Trennwänden, Sichtwänden und dgl. mit einzigartigem Design eignen. Man kann damit Behältermäntel in verschiedenen Höhen, mit unterschiedlichen Farbzusammenstellungen und mit den verschiedensten Formen auf einfachste Weise zusammenbauen, die dann mit jeweils vorgesehenem Material befüllbar sind.

Die diversen einfachen Prismen-Formen kann man auch modular zu neuen, komplizierten Formen verbinden, z.B. zu einer Kombination von Quader plus Fünfeckprisma, aber auch zu sternartig angeordneten Prismen usw. Eine Verlängerung eines Hochbeetes durch Hintereinanderfügen mehrerer Rechteck- bzw. Quadratbeete ist ebenfalls leicht möglich, da alle Wandelemente aufeinander abgestimmt sind.

Keineswegs unwesentlich ist, dass die neuen Behältnishüllen und Hochbeete im Gegensatz zu dem bekannten, aus anderen Materialien sehr kostengünstig und insbesondere wenig aufwändig, zu fertigen sind.

Anhand der Zeichnung wird die Erfindung näher erläutert:

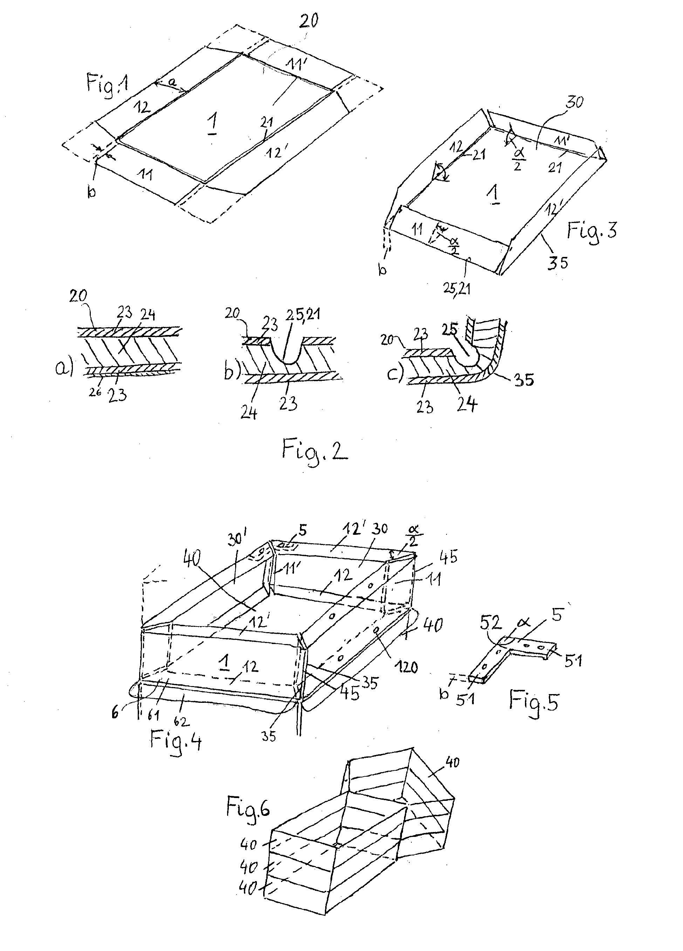

Es zeigen die Fig. 1 eine für die Herstellung der einzelnen Wandelemente der neuen Behälterhülle, insbesondere Umwandung, vorgesehene Grundplatte mit den geraden, parallel im, vorzugsweise gleichen, Abstand von allen Außenändern der Grundplatte verlaufenden Materialschwächungsgeraden bzw. -nuten, die Fig. 2a bis 2c Schnitte durch das die ge-nannte Grundplatte bildende Aluminium-Polyethy-len-Verbundmaterial, weiters durch den Bereich der Grundplatte mit in dieselbe eingebrachter Nut für die Materialschwächungsgerade und schließlich diese Grundplatte nach Aufbiegen eines Versteifungs- und Stabilisierstreifens, die Fig. 3 ein aus der in Fig. 1 gezeigten Grundplatte durch Umbiegen von deren Seitenstreifen hergestelltes, erfindungsgemäßes Wandelement für die Behältnishülle, die Fig. 4 eine einzelne, mit hier vier Wandelementen gemäß Fig. 3 hergestellte derartige Hülle, die Fig. 5 eines der in den Kanten-Innenwinkelbereichen der Stabilhülle angeordneten, dort zu befestigenden Winkelelemente und die Fig. 6 schematisch eine der möglichen Ausführungsformen einer erfindungsgemäßen Stabil- oder Behältnishülle.

Die Fig. 1 zeigt die flach-ebene und daher praktisch nur ganz geringen Raumbedarfsanspruch stellende Grundplatte 20 mit ihrer mittigen Hauptfläche 1 und den über die nutartigen Materialschwächungsgeraden 21 sich rund um dieselbe anschließenden Kantenstabilisierstreifen 11, 11' an zwei einander gegenüberliegenden Seiten der Hauptfläche 1 sowie die ebenfalls durch Ma-terialschwächungsgerade 21 abgetrennten Versteif-fungs- und Verbindungsstreifen 12, 12' an den beiden anderen, einander gegenüberliegenden Seiten der Hauptfläche 1.

Sie zeigt weiters, dass die Enden der Kantenstabilisierstreifen (11, 11') um einen zumindest etwa der Dicke eines später zu erläuternden Winkelelements 5, entsprechenden Betrag b verkürzt sind.

Die Fig. 2a zeigt - bei sonst gleichbleibenden Bezugzeichenbedeutungen - in Schnittansicht einen Ausschnitt aus einer für die Erstellung der später zu erläuternden Wandelemente 30 der neuen Stabil- oder Behältnishülle, insbesondere Umwandung, vorgesehenen Grundplatte 20, mit Mittelschicht 24 aus biegefähigem, jedoch mechanisch festem Kunststoff, beispielsweise Polyethylen, und beidseitg an dieselbe flächig gebundenen Metall-, bevorzugt Aluminiumblech-Außenschichten 23.

Die Fig. 2b zeigt - bei sonst gleichbleibenden Bezugzeichenbedeutungen - den selben Ausschnitt, in welchen entlang einer der in Fig. 1 gezeigten und be-schriebenen Materialschwächungslinien unter Abtra-gung, also Wegfall, der oberen der Metall-, insbesondere Aluminium-Blechschichten 23 eine scharfe Kanten vermeidende, runde Nut 25, also die Materialschwächungsgerade, ausgebildet ist, deren Grund in der Kunststoff-Mittelschicht 24, und zwar gezielt nahe der unteren Metallblechschicht 23 ausgebildet ist und die Fig. 2c zeigt - ebenfalls - bei sonst gleichbleibenden Bezugzeichen-bedeutungen - wie der rechts der Nut 25 befindliche Teil der Grundplatte 20 um 90° nach oben hin auf- bzw. umgebogen ist, wobei ein Zusammenschoppen der abgetragenen Aluminiumschicht an der Oberseite der Grundplatte bzw. an der Innenseite der Aufbiegung vermieden ist.

Die Fig. 3 zeigt - bei sonst gleichbleibenden Be-zugzeichenbedeutungen - wie aus der in der Fig. 1 gezeigten Grundplatte 20 durch Aufbiegen der Kantenstabilisierstreifen 11, 11' um einen Winkel $\frac{\alpha}{2}$ und der Ver-steifungs- und Verbindungsstreifen 12, 12' um 90° auf einfache Weise händisch und ohne sonstige technische Hilfsmittel ein Wandelement 30 gebildet werden kann. Der Winkel $\frac{\alpha}{2}$ ist der halbe jeweilige Kanten-Innenwinkel $\alpha$ des aus zumindest drei, hier konkret vier Wandelementen 40 gebildeten, in der folgenden Fig. 4 - bei sonst gleichbleibenden Bezugzeichenbedeutungen - gezeig-ten, quaderförmige Parallelepipedform aufweisenden Stabilhülle.

Die Fig. 4 zeigt - bei sonst gleichbleibenden Be-zugzeichenbedeutungen - eine aus je zwei unterschiedlichen rechteckigen Wandelementen 30, 30' gebildete quaderförmige Stabilhülle mit den vier Mantel-Hauptflächen 1, mit den um den halben Kanten-Innenwinkel $\frac{\alpha}{2}$ nach innen gebogenen Kantenstabilisierstreifen 11, 11' und den oberen und den unteren, um jeweils 90° zur Hauptfläche 1 ebenfalls nach innen gebogenen Versteifungs- und Verbindungsstreifen 12, 12'.

Die Kantenstabilisierstreifen 11, 11' der vier Wandelemente 30, 30' in den Kanten-Innenwinkelberei-chen zweier aneinanderstoßender, selbst Wandele-

ments-Kanten 35 aufweisender, zusammen die vertikalen Kanten 45 der jeweiligen Stabilhülle 40 bildenden Wandelemente 30, 30' liegen flächig aneinander. Die oberen und unteren Versteifungs- und Verbindungsstreifen 12, 12' sind im jeweiligen Kanten-Innenwinkelbereich mit Winkelelementen 5 unter Ausbildung der in Fig. 4 gezeigten Stabilhülle 40 mit den vertikalen Parallelepipedkanten 35 der jeweils aneinander grenzenden Wandelemente 30, 30' verbunden, bevorzugt verschraubt.

In der Fig. 4 angedeutet ist weiters, wie auf und unter der dort gezeigten quaderförmige Parallelepipedform aufweisenden Stabilhülle 40 jeweils eine weitere solche kanten- und flächenfluchtend angeordnet ist. Diese weiteren Stabilhüllen 40 sind mittels der vorher erwähnten Winkelelemente 5 in den Kanten-Innenwinkelbereichen über ihre flächig aneinander liegenden Versteifungs- und Verbindungsstreifen 12, 12' mit einem jeweils erstgenannten Parallelepiped verbunden, vorzugsweise verschraubt, und bilden auf diese Weise eine Hochbeet-Umwandung mit, z.B. insgesamt drei, übereinander geschichteten Lagen gleichartig ausgebildeter parallelepipedischer Einzelhüllen. Die einzelnen derartigen Hüllen können z.B. eine Höhe von 25cm haben, wodurch eine Gesamthöhe bzw. Standardhöhe der für eine Hochbeet-Umwandung vorgesehenen Stabilhülle von 75cm erreicht wird.

In der Fig. 4 angedeutet sind noch Verschraubungen 120 mittels welchen zwei übereinander angeordnete Stabilhüllen 40 über ihre Versteifungs- und Verbindungsstreifen 12, 12' miteinander verbunden sind. Die Abstände dieser Verschraubungen od. dgl. betragen vorzugsweise 25 bis 30cm, voneinander.

Nicht zuletzt ist zwischen zwei einzelnen aufeinander liegenden Stabilhüllen 40, bzw. zwischen deren jeweiligen horizontalen Versteifungs- und Verbindungsstreifen 12, 12' jeweils der Haltestreifen 61 eines - mit seiner Schneckenkante 62 nach außen und schräg nach unten ragenden - Schneckenkantenstreifens 6 eingeklemmt.

Die Fig. 5 zeigt - bei sonst gleichbleibenden Bezugszeichenbedeutungen - ein an sich konventionelles - "Winkeleisen" für das Zusammenschrauben von einander benachbarten Wandelementen 30, 30' zu den parallelepipedischen Stabil- oder Behältnishüllen 40, sowie der einzelnen Hüllen, welche übereinander angeordnet sind. Dieses Winkelelement 5 hat zwei von seinem Winkelbereich 52 abstehende Schenkel 51, welche einen dem jeweiligen Kanten-Innenwinkel α gleichenden Winkel α zueinander einschließen. Die Materialstärke dieses "Winkeleisens" ist vorteilhaft etwas geringer, als die "Verkürzung" b der Enden der Kantenstabilisierstreifen 11, 11'.

Die Winkelelemente 5 werden im Kanten-Innenwinkelbereich mit ihren Außenseiten innen an die Hauptflächen 1 zweier benachbart angeordneter Wandelemente 40 anliegend, mit den Versteifungs- und Verbindungsstreifen 12, 12' der Wandelemente 30 einer Stabilhülle 40 und/oder mit den gleichartigen Versteifungs- und Verbindungsstreifen zweier übereinander angeordneter Stabilhüllen 40 zusammenmontiert.

Schließlich zeigt die Fig. 6 - bei sonst gleichbleibenden Bezugzeichenbedeutungen - schematisch eine der vielen Möglichkeiten der konkreten Gestaltung einer erfindungsgemäßen prallelepipedischen Hochbeet-Umwandung mit einem an ein vierseitiges Prisma anschließenden fünfseitigen Prisma, jedes davon bestehend aus drei Lagen prismatischer Stabilhüllen.

In analoger Weise können die verschiedenen Parallelepipedformen der neuen Stabil- oder Behältnishüllen gestaltet werden, wie z.B. sternförmige oder andere Parallelepipedformen, selbstverständlich auch mit unterschiedlichen Höhen.

An dieser Stelle ist deutlich darauf zu verweisen, dass die einzelnen, z.B. quaderartigen, Parallelepipedform aufweisenden Stabilhüllen, beispielsweise gabionen- oder ziegelartig neben- und übereinander angeordnet, zu längeren Trennwänden, etwa nach Art von Mauern mit gerad-linearem oder auch eckige Vorsprünge und Rücksprünge aufweisenden Verlauf, kombiniert werden können. In die Innenräume der so gebildeten hohlen "Mauerwand" können Erden, Kompost, Behälterpartikel u.dgl., weiters aber selbstverstndlich auch zuerst fließfähige und dann erhärtende anorganische Bindemittel mit Zuschlagstoffen, wie z.B. (Leicht-)Betone oder aber Kunststoffschäume, die gegebenenfalls Pflanzen-Nährstoffe enthalten können, eingebracht werden.

Selbstverständlich können die Sicht- oder Trennwände oder auch der dieselben bildenden einzelnen Quader individuell gefärbt oder bedruckt sein.

Schließlich soll noch erwähnt sein, dass - insbesondere im Falle von Hochbeeten für Frühpflanzen - am oberen Rand, insbesondere an den oberen Versteifungs- und Verbindungsstreifen 12, 12', Befestigungselemente, z.B. Winkel od. dgl., für die Anbringung einer z.B. tonnenförmigen, transparenten Überdachung aus Kunststoff befestigt sein können.

**Patentansprüche**

1. Rechteck- und/oder Quadrat-Hauptflächen (1) aufweisendes Wandelement (30) aus plattenartigem Flachmaterial für die Wandung von Parallelepiped-, vorzugsweise Kubus- Quader oder Mehreck-Prismenform aufweisenden, Stabil- oder Behältnishüllen (40) für rieselfähiges, körniges, stückiges und/oder zuerst fließfähiges und dann erhärtendes Gut, insbesondere Umfassungswandungen von Hochbeeten od. dgl.,

   - wobei an zwei von deren einander gegenüberliegenden, zueinander parallelen Seiten seitlich jeweils mindestens ein weiteres gleichartig ausgebildetes Wandelement (30') unter Bildung einer gemeinsamen vertikalen Kante (45) der Wandung der Parallelepipedform aufweisenden Stabil- oder Behältnishüllen (40) anschließbar ist, das Wandelement (30,30') entlang der beiden anderen, ebenfalls einander gegenüberliegenden Seiten - von seiner Hauptfläche (1) in gleicher Richtung wie die Kantenstabilisierstreifen (11,11') um einen Winkel von 90° umgebogene Versteifungs- und Verbindungsstreifen (12,12') aufweist,
**dadurch gekennzeichnet,**
- **dass** entlang der genannten beiden Seiten der Hauptfläche (1) jeweils ein Kantenstabilisierstreifen (11, 11'), um einen, dem halben Kanten-Innenwinkel ($\alpha$) des jeweiligen Parallelepipeds

entsprechenden Winkel $\left(\dfrac{\alpha}{2}\right)$ umgebogen ist,

- **dass** die beiden Kantenstabilisierungsstreifen (11, 11') an ihren beiden Enden um einen Betrag (b) verkürzt sind.

2. Wandelement nach Anspruch 1, **dadurch gekennzeichnet,**

   - **dass** es aus einem vor Ort händisch entlang von Materialschwächungsgeraden (21) bruch- und rissfrei umkantbaren Flachmaterial, bevorzugt aus einer - der jeweiligen Hauptfläche (1) des Wandelements (30,30') entsprechende Form aufweisenden - Grundplatte (20), aus einem mechanisch steifen Verbundmaterial, vorzugsweise Metall-, insbesondere Aluminium-Kunststoff-Verbundmaterial mit beidseitig an eine Kunststoff-, insbesondere Polyethylen-Mittelschicht (24), flächig gebundenen, dünnen Metall-, insbesondere Aluminiumblech-Schichten (23) gebildet ist,
   - wobei auf einer Seite der Grundplatte (20) entlang von insgesamt die Hauptfläche (1) eines jeweiligen Wandelements (30, 30') definierenden, im Abstand (a) parallel zu allen Seitenrändern der Grundplatte (20) verlaufenden Materialschwächungsgeraden (21) eine der Metall-, insbesondere Aluminium-Blechschichten (23) unter Bildung einer zumindest bis in die Kunststoff-Mittelschicht (24), gegebenenfalls bis zur anderen Metall-, insbesondere Aluminium-Blechschicht (23), reichenden, vorzugsweise gerundete Kanten und runden Nutgrund aufweisenden, Nut (26) abgetragen ist.

3. Wandelement nach Anspruch 1 oder 2, **dadurch gekennzeichnet,**

   - **dass** die beiden Versteifungs- und Verbindungsstreifen (12, 12') im wesentlichen die Form eines flachen Trapezes aufweisen.

4. Wandelement nach einem der Ansprüche 1 bis 3, **dadurch gekennzeichnet,**

   - **dass** das aus der für dessen Bildung vorgesehenen Grundplatte (20) gebildete Wandelement (30) selbst auf einer - der Außenseite des mit weiteren Wandelementen (30') letztlich zu bildenden Parallelepipedform aufweisenden Stabil- oder Behältnishüllen (40) entsprechenden - Seite bedruckt und/oder färbig ausgebildet oder beschichtet ist, insbesondere, dass dort eine von dessen Metall-, insbesondere Aluminium-Blechschichten (23) als färbige Eloxalschicht vorliegt.

5. Parallelepiped-, insbesondere Kubus-, Quaderoder Mehreckprismenform aufweisende Stabil- oder Behältnishülle (40) für rieselfähiges, körniges, stückiges und/oder zuerst fließfähiges und dann erhärtendes Gut, welche insbesondere die Umfassungswandung von Hochbeeten od. dgl. bildet, **dadurch gekennzeichnet,**

   - **dass** sie mit mindestens drei Wandelementen (30, 30') gemäß einem der Ansprüche 1 bis 4 gebildet ist,
   - wobei die Wandelemente (30, 30') unter Bildung der vertikalen Stabil- oder Behältnishüllen-Kanten (45) über ihre flächig aneinanderliegenden Kantenstabilisierstreifen (11, 11') geschlossen-ringförmig aneinander geschlossen sind,
   - indem die jeweils seitlich aneinandergrenzenden Wandelemente (30, 30') mittels, mit ihren Schenkeln (51) an die Endbereiche der um 90° von der Hauptfläche (1) nach innen hin umgebogenen Versteifungs- und Verbindungsstreifen (12, 12') gebundenen, und mit ihrem Winkelbereich (52) im Stabil- oder Behältnishüllen-Kanten-Innenwinkelbereich angeordneten Winkel-Verbindungselementen (5) aus Metall, rigidem Kunststoff oder Metall-Kunststoff-Verbundmaterial zur jeweiligen parallel-epipedischen Stabil- oder Behältnishüllen-Form aneinander gebunden sind.

6. Parallelepiped-, insbesondere Kubus-, Quaderoder Mehreckprismenform aufweisende Stabil- oder Behältnishülle, welche insbesondere die Umfassungswandung von Hochbeeten od. dgl. bildet, **dadurch gekennzeichnet,**

   - **dass** sie mit zumindest zwei, vorzugsweise mit drei und vorzugsweise vertikal fluchtend aufeinander angeordneten, Stabil- oder Behältnishüllen (40), die insbesondere Umfassungswandungen bilden, gemäß Anspruch 5 gebildet ist,
   - wobei eine jeweils untere Stabil- oder Behältnishülle (40), die insbesondere eine Umfassungswandung bildet, über ihre oberen, waagrecht verlaufenden Versteifungs- und Verbindungsstreifen (12') mittels Winkel-Verbindungselementen (5) mit den an denselben flächig anliegenden unteren Versteifungs- und Verbindungsstreifen (12) der auf der jeweils unterhalb angeordneten Stabil- oder Behältnishülle (40), die insbesondere eine Umfassungswandung bildet, ruhenden oberen Stabil- oder Behältnishülle bevorzugt lösbar, verbunden ist.

7. Parallelepiped-, insbesondere Kubus-, Quader- oder Mehreckprismenform aufweisende Stabil- oder Behältnishülle (40), die insbesondere eine Umfassungswandung bildet, nach Anspruch 5 oder 6, **dadurch gekennzeichnet, dass** die WinkelVerbindungselemente (5) mit den Versteifungs- und Verbindungsstreifen (12, 12') einer einzelnen Stabil- oder Behältnishülle (40) oder mit den flächig aneinanderliegenden Versteifungs- und Verbindungsstreifen (12, 12') zweier fluchtend aufeinander angeordneter Stabil- oder Behältnishüllen (40) mittels, bevorzugt mehrfacher, Verschraubung lösbar oder mittels Vernietung oder Verklebung unlösbar verbunden sind.

8. Parallelepiped-, insbesondere Kubus-, Quader- oder Mehreckprismenform aufweisende Stabilhülle oder Behältnishülle, die insbesondere eine Umfassungswandung bildet, gemäß einem der Ansprüche 5 bis 7, **dadurch gekennzeichnet, dass** die aneinander flächig anliegenden oberen und unteren Versteifungs- und Verbindungsstreifen (12, 12') zweier fluchtend aufeinander angeordneter Stabilhüllen oder Behältnishüllen (40), selbst, bevorzugt durch gesonderte Verschraubungen oder Vernietungen (120), miteinander verbunden sind.

9. Parallelepiped-, insbesondere Kubus-, Quader- oder Mehreckprismenform aufweisende Stabil- oder Behältnishülle, die insbesondere eine Umfassungswandung bildet, gemäß einem der Ansprüche 5 bis 8, **dadurch gekennzeichnet, dass** zwischen den oberen und unteren Versteifungs- und Verbindungsstreifen (12, 12') zweier fluchtend aufeinander angeordneter Stabilhüllen (40), die insbesondere Umfassungswandungen bilden, jeweils der Schneckenkanten-Haltestreifen (61) eines die genannte Stabilhülle (40) außen überragenden, eine Schneckenkante (62) bildenden Schneckenkantenstreifen (6) angeordnet ist.

10. Parallelepiped-, insbesondere Kubus-, Quader- oder Mehreckprismenform aufweisende Stabil- oder Behältnishülle, die insbesondere eine Umfassungswandung bildet, gemäß einem der Ansprüche 5 bis 9, **dadurch gekennzeichnet, dass** deren Grund-, und gegebenenfalls Deckfläche mit einer der jeweiligen Parallelepiped-Grundrissform entsprechend geformten Grund-, und gegebenenfalls Deckplatte ausgestattet ist (sind), welche an die untersten Versteifungs- und Verbindungsstreifen (12); uns gegebenenfalls an die obersten Versteifungs-, und Verbindungsstreifen (12'), dort jeweils flächig anliegend, vorzugsweise durch Verschraubung, Vernietung oder Verklebung, gebunden ist (sind).

11. Verfahren zur Erstellung einer Parallelepiped-, insbesondere Kubus-, Quader- oder Mehreckprismenform aufweisenden Stabil- oder Behältnishülle für rieselfähiges, stückiges und/oder zuerst fließfähiges und dann erhärtendes Gut, die insbesondere eine Umfassungswandung, vorzugsweise von Hochbeeten, bildet, gemäß einem der Ansprüche 5 bis 10,

- dass die für die Bildung von dessen vertikalen Hauptflächen (1) vorgesehen, in volumsminimiertem flachebenen Zustand vorliegenden oder angelieferten - im wesentlichen Rechteck- oder Quadratform mit Einschnitten an den Ecken aufweisenden Grundplatten (20), gegebenenfalls vor Ort und mit einfachem Werkzeug, entlang ihrer vier Materialschwächungsgeraden (21) nach einer Seite der Grundplatte (20) hin um einen halben Kantenwinkel $\left(\dfrac{\alpha}{2}\right)$ zu zwei einander gegenüberliegenden Vertikal-Kantenstabilisierstreifen (11, 11') und jeweils um einen rechten Winkel zu zwei ebenfalls einander gegenüberliegend und zueinander parallel verlaufenden Versteifungs- und Verbindungsstreifen (12, 12') auf- bzw. umgebogen werden, um die einzelnen Wandelemente (30, 30') zu bilden und - dass dann die einzelnen, auf diese Weise mit ihren vertikalen Kantenstabilisierstreifen (11, 11') flächig aneinanderliegenden Wandelemente (30, 30'), mittels an die Versteifungs- und Verbindungsstreifen (12, 12') gebundenen Winkel-Verbindungselementen (5) zu den genannten parallelepiped-förmigen Stabil- oder Behälterhüllen (40), die insbesondere Umfassungswandungen für Hochbeete u. dgl. bilden, vereinigt werden.

**Claims**

1. Wall element (30) with rectangular and/or square main surfaces (1) of platelike flat material for the wall of a stable or container shell (40) having a parallelepiped shape, preferably a cube, cuboid or polygon-prism shape, for a free-flowing, granular, lumpy and/or at first flowing and then hardening goods, particularly for surrounding walling of raised beds or the like.

- whereby at two of its opposing mutually parallel sides, in each case there is at least one further identically constructed wall element (30') that may be connected laterally to form a common vertical edge (45) of the wall of the parallelepiped shaped stable or container shell (40), whereby the wall element (30, 30') has, in addition to the edge stabilisation strips (11,11'), stiffening and connecting strips (12, 12') along the two other sides opposite one another, whereby the latter are bent from the main surface (1) of the wall element (30, 30') by an angle of 90° in the same direction, **characterised in that**,
- along the said two sides of the main surface in each case a edge stabilisation strip (11, 11') is bent by an angle ($\alpha$) corresponding to half the interior edge angle $\left(\dfrac{\alpha}{2}\right)$ of the respective parallelepiped,
- the two edges of the edge stabilisation strips (11, 11') are shortened at both ends by an amount (b).

2. Wall element according to claim 1, **characterised in that**,

- the edged flat material free of breaks and cracks along the material weakening line (21), is preferably made from a base plate (20) having a form corresponding to that of the respective main surface (1) of the wall element (30, 30') and made of a mechanically rigid composite material, preferably metal, especially an aluminium-plastic composite material with both sides of a plastic, especially a polyethylene middle layer (24), flat bonded, thin metal, especially aluminium plate layers central layer (24) flat bonded thin metal layers, especially aluminium sheet layers (23),
- whereby on one side of the base plate (20) along the entire main surface (1) defining a respective wall element (30, 30'), extending at a distance (a) parallel to all side edges of the material weakening line (21) of the base plate (20), whereby a metal layer, especially an aluminium sheet layer (23) has a groove (26) removed, preferably with rounded edges and a rounded groove bottom, extending at least into the plastic layer (24) or, where required, into other metal layers, especially an aluminium sheet layer (23).

3. Wall element according to claim 1 or 2, **characterised in that**

- the two stiffening and connecting strips (12, 12') have substantially the shape of a flat trapezoid.

4. Wall element according to one of the claims 1 to 3, **characterised in that**

- the base plate (20) provided for the formation of the wall element (30) itself has on one of the outer sides of the corresponding stable or container shells (40) of the parallelepiped to be ultimately formed with further wall elements, a printed and/or coloured or coated layer, especially in the form of a metal layer, especially an aluminium sheet layer (23) as a coloured anodised layer.

5. Parallelepiped, especially cube, cuboid or polygonal prism shaped stable or container shell (40) for a free-flowing, granular, lumpy and/or at first flowing and then hardening goods, which forms in particular surrounding walling for raised beds or similar, **characterised in that**,

- it is formed with at least three wall elements (30, 30') according to one of the claims 1 to 4,
- whereby the wall elements (30, 30') on forming the vertical stable or container shell edges (45) via its flat abutting edge stabilisation strips (11, 11') together produce a closed ring,
- whereby the laterally adjacent wall elements (30, 30') are bonded together with their legs (51) parallel to the end sections of the stiffening and connecting strips (12, 12') that are bent inwards by 90° from the main surface (1), and arranged with their angle region (5) inside the stable or container shell edge inner angle region (52) whereby the angle connecting elements are made of metal, rigid plastic or metal-plastic composite material for each parallelepiped stable or container shell shape and bonded to one another.

6. Stable or container shell having a parallelepiped shape, especially cube, cuboid or polygonal prism shape, which in particular forms the surrounding walling of raised beds or similar, **characterised in that**,

- at least two, preferably three, stable or container shells (40) are arranged according to claim 5, preferably in vertical alignment to one another, to form in particular surrounding walling,
- whereby a respective lower stable or container shell (40), in particular forming surrounding walling, via their upper, horizontally extending stiffening and connecting strips (12') are connected by means of angle connecting elements (5) with the adjacent lower stiffening and connection strips (12) of the stable or container shells (40) arranged below on the same surface level, in order to constitute a particular surrounding walling, whereby the stationary upper stable or container shells are preferably releasably connected.

7. Stable or container shell (40) having a parallelepiped shape, especially cube, cuboid or polygonal prism shape, which in particular forms surrounding walling, according to claim 5 or 6, **characterised in that** the angle connecting elements (5) are connected to the stiffening and connecting strips (12, 12') of a single stable or container shell (40) or the abutting stiffening and connecting strips (12, 12') of two aligned stable or container shells (40) by means, preferably multiple, of releasable screws, or are permanently connected by riveting or bonding.

8. Stable or container shell (40) having a parallelepiped shape, especially cube, cuboid or polygonal prism shape, which in particular forms surrounding walling, according to one of the claims 5 to 7, **characterised in that** the mutually abutting planar upper and lower stiffening and connecting strips (12, 12') of two stable or container shells (40) aligned with one another, are preferably connected by separate screws or rivets (120).

9. Stable or container shell (40) having a parallelepiped shape, especially cube, cuboid or polygonal prism shape, which in particular forms surrounding walling, according to one of the claims 5 to 8, **characterised in that** between the upper and lower stiffening and connecting strips (12, 12') of two aligned sequentially-arranged stable shells (40), in particular in the form of a surrounding walling, each of the snail guard edge holding strips (61) of one of the said stable shells (40) has an outward-projecting snail guard edge (62) in the form of a snail guard edge strip (6).

10. Stable or container shell (40) having a parallelepiped shape, especially cube, cuboid or polygonal prism shape, which in particular forms surrounding walling, according to one of the claims 5 to 9, **characterised in that** the main surface, and optionally a top surface of the respective parallelepiped plan shape is equipped with a correspondingly shaped base plate, and optional cover plate attached to the bottom stiffening and connecting strip (12); if necessary, this can be fixed to the uppermost stiffening and connecting strips (12') lying flat against one another, preferably through screwing, riveting or bonding.

11. A method for creating a stable or container shell (40) having a parallelepiped shape, preferably a cube, cuboid or polygon-prism shape, for a free-flowing, granular, lumpy and/or at first flowing and then hardening goods, particularly a surrounding walling, preferably of raised beds or the like, according to one of the claims 5 to 10,

- whereby the base plates presented or delivered for the formation of the vertical main surfaces (1) in a space-saving flat condition are essentially of rectangular or square shape with notches at the corners, and, if necessary, are provided on site and for assembly using simple tools, and have along their four material weakening lines (21) on one side of the base plates (20) at a half edge angle $\left(\dfrac{\alpha}{2}\right)$ to two opposing vertical edge stabilisation strips (11, 11') each of which is bent upwards at a right angle to two diametrically opposing and mutually parallel stiffening and connecting strips (12, 12'), in order to form the individual wall elements, and that then, in this way, the individual flat adjacent wall elements (30, 30') with their vertical edge stabilisation strips (11, 11') are combined with the stiffening and connection strips (12, 12') and the angle connecting elements (5) to the parallelepiped stable or container shells (40) to form, in particular, surrounding walling and the like for raised beds.

**Revendications**

1. Élément de paroi (30) comportant des surfaces principales (1) rectangulaires et/ou carrées, réalisé dans un matériau plat en forme de panneau pour la paroi de coques solides ou coques de conteneurs (40) ayant une forme parallélépipédique, de préférence une forme de cube, de parallélépipède rectangle ou de prisme polygonal, pour des matières coulantes, granulaires, en morceaux et/ou d'abord fluides et durcissant ensuite, en particulier des parois périphériques de carrés potagers ou de tout élément similaire,

- au moins un autre élément de paroi (30') réalisé de manière identique pouvant être monté latéralement sur deux côtés face à face, parallèles entre eux, en formant une arête verticale (45) commune de la paroi des coques solides ou coques de conteneurs (40) de forme parallélépipédique, l'élément de paroi (30, 30') comportant des bandes de renfort et de liaison (12, 12') s'étendant le long des deux autres côtés également face à face de sa surface principale (1) et pliées selon un angle de 90° dans la même direction que les bandes de stabilisation des bords (11, 11'),
**caractérisé**

- **en ce que** le long desdits deux côtés de la surface principale (1), respectivement une bande de stabilisation des bords (11, 11') est pliée selon un angle $\left(\dfrac{\alpha}{2}\right)$ correspondant au demi-angle intérieur ($\alpha$) entre les arêtes du parallélépipède concerné,

- **en ce que** les deux bandes de stabilisation des bords (11, 11') sont raccourcies d'une valeur (b) au niveau de leurs deux extrémités.

2. Élément de paroi selon la revendication 1, **caractérisé**

    - **en ce qu'**il est constitué d'un matériau plat apte à être plié sur place manuellement sans cassure et sans fissure le long de lignes d'affaiblissement du matériau (21), de préférence dans une plaque de base (20) ayant une forme correspondant à la surface principale (1) de l'élément de paroi (30, 30'), dans un matériau composite mécaniquement rigide, de préférence un matériau composite métallique, en particulier un matériau composite d'aluminium et de matière plastique, avec des couches métalliques minces, de préférence des couches de tôle d'aluminium (23), reliées de manière plane aux deux faces d'une couche médiane plastique, en particulier une couche médiane en polyéthylène (24),

    - sur une face de la plaque de base (20), le long de lignes d'affaiblissement du matériau (21) définissant dans l'ensemble la surface principale (1) d'un élément de paroi (30, 30') respectif, s'étendant à une distance (a) parallèlement à tous les bords latéraux de la plaque de base (20), l'une des couches métalliques, en particulier des couches de tôle d'aluminium (23), est érodée en formant une rainure (26) s'étendant jusque dans la couche médiane plastique (24), le cas échéant jusqu'à l'autre couche métallique, de préférence la couche de tôle d'aluminium (23), et comportant de préférence des bords arrondis et un fond rond.

3. Élément de paroi selon la revendication 1 ou 2, **caractérisé en ce que** les deux bandes de renfort et de liaison (12, 12') présentent sensiblement la forme d'un trapèze plat.

4. Élément de paroi selon l'une quelconque des revendications 1 à 3, **caractérisé en ce que** l'élément de paroi (30) lui-même, constitué de la plaque de base (20) prévue pour sa réalisation, est imprimé et/ou réalisé sous forme colorée ou est revêtu sur une face - correspondant à la face extérieure des coques solides ou coques de conteneur (40) ayant la forme d'un parallélépipède à réaliser finalement avec d'autres éléments de paroi (30'), en particulier **en ce que** l'une de ses couches métalliques, en particulier l'une des couches de tôle d'aluminium (23), est présente sous forme de couche anodisée en couleur.

5. Coque solide ou coque de conteneur (40) ayant une forme parallélépipédique, de préférence une forme de cube, de parallélépipède rectangle ou de prisme polygonal, pour des matières coulantes, granulaires, en morceaux et/ou d'abord fluides et durcissant ensuite, qui constitue en particulier la paroi périphérique de carrés potagers ou de tout élément similaire, **caractérisée en ce que**

    - elle est constituée d'au moins trois éléments de paroi (30, 30') selon l'une des revendications 1 à 4,

    - lesdits éléments de paroi (30, 30') étant reliés entre eux en forme d'anneau fermé par l'intermédiaire de leurs bandes de stabilisation des bords (11, 11'), en appui plan les unes contre les autres, moyennant la formation des arêtes verticales (45) de la coque solide ou coque de conteneur,

    - du fait que respectivement les éléments de paroi (30, 30') latéralement adjacents sont reliés par leurs branches (51) aux zones d'extrémité des bandes de renfort et de liaison (12, 12') pliées sur 90° à partir de la surface principale (1) vers l'intérieur, et sont reliés entre eux par leur zone angulaire (52) à des éléments de liaison angulaires (5) en métal, matière plastique rigide ou matériau composite métal-matière plastique, disposés dans la zone de l'angle intérieur des arêtes de la coque solide ou coque de conteneur, pour obtenir dans chaque cas la forme parallélépipédique d'une coque solide ou coque de conteneur.

6. Coque solide ou coque de conteneur ayant une forme parallélépipédique, de préférence une forme de cube, de parallélépipède rectangle ou de prisme polygonal, qui constitue en particulier la paroi périphérique de carrés potagers ou de tout élément similaire, **caractérisée en ce que**

    - elle est constituée selon la revendication 5 avec au moins deux, de préférence avec trois coques solides ou coques de conteneur (40), qui sont disposées de préférence en alignement vertical les unes au-dessus des autres et forment en particulier des parois périphériques,

    - une coque solide ou coque de conteneur (40) respectivement inférieure, qui forme en particulier une paroi périphérique, étant reliée, de préférence de manière amovible, par l'intermédiaire de ses bandes de renfort et de liaison (12, 12') horizontales, par l'intermédiaire d'éléments de liaison angulaires (5), aux bandes de renfort et de liaison (12, 12') inférieures, en appui plan contre ces derniers, de la coque solide ou coque de conteneur supérieure reposant sur la coque solide ou coque de conteneur (40) qui est disposée respectivement au-dessous et qui forme en particulier une paroi périphérique.

**7.** Coque solide ou coque de conteneur (40) ayant une forme parallélépipédique, de préférence une forme de cube, de parallélépipède rectangle ou de prisme polygonal, qui constitue en particulier une paroi périphérique, selon la revendication 5 ou 6, **caractérisée en ce que** les éléments de liaison angulaires (5) sont reliés, de préférence de manière amovible par un assemblage à plusieurs vis ou de manière inamovible par un assemblage riveté ou un assemblage collé, aux bandes de renfort et de liaison (12, 12') d'une seule coque solide ou coque de conteneur (40) ou aux bandes de renfort et de liaison (12, 12') en appui plan les unes contre les autres de deux coques solides ou coques de conteneur (40) alignées l'une au-dessus de l'autre.

**8.** Coque solide ou coque de conteneur ayant une forme parallélépipédique, de préférence une forme de cube, de parallélépipède rectangle ou de prisme polygonal, qui constitue en particulier une paroi périphérique, selon l'une quelconque des revendications 5 à 7, **caractérisée en ce que** les bandes de renfort et de liaison (12, 12') supérieures et inférieures, en appui plan les unes contre les autres, de deux coques solides ou coques de conteneur (40) alignées l'une au-dessus de l'autre, sont reliées entre elles par elles-mêmes, de préférence par des assemblages vissés ou assemblages rivetés (120) séparés.

**9.** Coque solide ou coque de conteneur ayant une forme parallélépipédique, de préférence une forme de cube, de parallélépipède rectangle ou de prisme polygonal, qui constitue en particulier une paroi périphérique, selon l'une quelconque des revendications 5 à 8, **caractérisée en ce qu'**entre les bandes de renfort et de liaison (12, 12') supérieures et inférieures de deux coques solides (40) alignées l'une au-dessus de l'autre, qui constituent en particulier une paroi périphérique, est disposée respectivement la bande de maintien (61) d'une bande de bord anti-escargot (6) formant un bord anti-escargot (62) et s'avançant vers l'extérieur au-delà de ladite coque solide (40).

**10.** Coque solide ou coque de conteneur ayant une forme parallélépipédique, de préférence une forme de cube, de parallélépipède rectangle ou de prisme polygonal, qui constitue en particulier une paroi périphérique, selon l'une quelconque des revendications 5 à 9, **caractérisée en ce que** sa surface de fond et, le cas échéant, la surface de recouvrement est (sont) munie (s) d'une plaque de base et, le cas échéant, d'une plaque de recouvrement, dont la forme correspond à la forme de base parallélépipédique et qui est (sont) reliée (s) aux bandes de renfort et de liaison (12) inférieures et, le cas échéant, aux bandes de renfort et de liaison (12') supérieures, dans chaque cas en appui plan, de préférence par un assemblage vissé, un assemblage riveté ou un assemblage collé.

**11.** Procédé permettant de réaliser une coque solide ou coque de conteneur ayant une forme parallélépipédique, de préférence une forme de cube, de parallélépipède rectangle ou de prisme polygonal, pour des matières coulantes, granulaires, en morceaux et/ou d'abord fluides et durcissant ensuite, laquelle constitue en particulier une paroi périphérique de carrés potagers, selon l'une quelconque des revendications 5 à 10, **caractérisé**

- **en ce que**, pour former les différents éléments de paroi (30, 30'), les plaques de base (20), prévues pour la formation des surfaces principales (1) verticales de ladite coque, disponibles ou livrées à l'état plat réduisant le volume - comportant sensiblement la forme d'un rectangle ou d'un carré avec des encoches dans les coins - peuvent être pliées ou rabattues, le cas échéant sur place et avec un outillage simple, le long de leurs quatre lignes d'affaiblissement du matériau (21) vers une face de la plaque de base (20) selon un demi-angle d'arête $\left(\dfrac{\alpha}{2}\right)$ pour obtenir deux bandes de stabilisation des arêtes verticales (11, 11') disposées face à face et respectivement selon un angle droit pour obtenir deux bandes de renfort et de liaison (12, 12'), disposées également face à face et parallèles entre elles, et

- **en ce que**, ensuite, les différents éléments de paroi (30, 30'), en appui plan les uns contre les autres de cette manière avec leurs bandes de stabilisation des arêtes verticales (11, 11') sont réunis, au moyen d'éléments de liaison angulaires (5), reliés aux bandes de renfort et de liaison (12, 12'), pour obtenir lesdites coques solides ou coques de conteneur (40) de forme parallélépipédique, qui constituent en particulier des parois périphériques de carrés potagers ou de tout élément similaire.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10303640 A1
- DE 202005000418 U1
- DE 202009010705 U1
- DE 4328624 A1